# FASCICULE DE BREVET EUROPEEN

(11) **EP 3 502 541 B1**
(45) Date de publication et mention de la délivrance du brevet: **30.12.2020**
(21) Numéro de dépôt: 18207501.0
(22) Date de dépôt: 21.11.2018
(51) Int. Cl.: F17C 13/04

(54) **ROBINET ET BOUTEILLE DE FLUIDE SOUS PRESSION**
HAHN UND FLASCHE MIT UNTER DRUCK STEHENDER FLÜSSIGKEIT
VALVE AND CYLINDER FOR PRESSURISED FLUID

(30) Priorité: 19.12.2017 FR 1762416
(43) Date de publication de la demande: 26.06.2019
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FERRE, Aurélien, 75011 Paris (FR); RUDNIANYN, Philippe, 91700 Villiers sur Orge (FR); BATUT, Celestin, 75015 Paris (FR)
(74) Mandataire: Air Liquide

(56) Documents cités:
- WO-A1-2014/072597
- WO-A1-2015/110717
- FR-A1- 3 016 681
- FR-A1- 3 034 837
- US-A1- 2014 203 026

## Description

L'invention concerne un robinet pour bouteille de fluide sous pression ainsi qu'une bouteille correspondante.

L'invention concerne plus particulièrement un robinet pour bouteille de fluide sous pression comprenant un corps muni d'une extrémité destinée à être reliée à l'orifice d'une bouteille de fluide sous pression, le corps du robinet abritant un circuit de soutirage comprenant une première extrémité amont destinée à communiquer le volume de stockage d'une bouteille de fluide sous pression et une seconde extrémité aval destinée à être raccordée à un organe utilisateur du gaz soutiré, le circuit de soutirage comprenant un organe de régulation du débit et/ou de la pression du fluide soutiré entre les extrémités amont et aval, le robinet comprenant un organe de commande manuelle de l'organe de régulation, l'organe de commande étant monté mobile relativement au corps du robinet et coopérant avec l'organe de régulation pour contrôler le débit et/ou la pression de fluide admis à circuler de l'extrémité amont vers l'extrémité aval selon la position de l'organe de commande par rapport au corps du robinet, le robinet comportant un capteur de position de l'organe de commande configuré pour générer un signal électrique représentatif de la position de ce dernier ou du débit et/ou la pression de fluide imposé par l'organe de régulation.

L'invention concerne un robinet pourvu d'un dispositif électronique d'indication de données physiques relatives au contenu d'une bouteille de fluide sous pression notamment du gaz sous pression.

On pourra se référer par exemple au document WO2015110717A1 qui décrit un exemple d'un tel dispositif. Ce document décrit un robinet muni d'un détecteur de la position du sélecteur de débit. Ceci permet d'afficher et/ou de calculer plus rapidement la consommation instantanée de gaz, la quantité de gaz restant dans la bouteille et l'autonomie en gaz avant que la bouteille ne soit vide. Ce document décrit en particulier un capteur de position utilisant un potentiomètre et un mécanisme engrenant avec le sélecteur manuel dont une pièce mobile du mécanisme forme le curseur du potentiomètre.

Cette solution permet de détecter de façon fiable la position du sélecteur. Cependant, cette structure de détecteur présente des inconvénients parmi lesquels : un encombrement relativement important, un nombre de pièces relativement importantes (engrenage...), une étanchéité difficile à réaliser (vis-à-vis du sable ou de la poussière notamment), une gestion délicate des jeux axiaux et radiaux ....

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que le capteur de position de l'organe de commande comprend un circuit conducteur ayant une résistance électrique déterminée, un organe de mesure d'une grandeur électrique du circuit conducteur et un curseur, le circuit conducteur et le curseur étant mobiles relativement l'un par rapport à l'autre lors du déplacement de l'organe de commande par rapport au corps du robinet dans des configurations distinctes dans lesquelles le curseur modifie la forme et/ou la surface du circuit conducteur mesuré par l'organe de mesure.

Par ailleurs, des modes de réalisation de l'invention peuvent comporter l'une ou plusieurs des caractéristiques suivantes :
- le circuit conducteur est monté fixe relativement au corps du robinet et le curseur est monté sur l'organe de commande, c'est-à-dire mobile relativement au corps du robinet,
- le circuit conducteur comprend un chemin continu, le curseur étant mobile le long d'au moins une partie du chemin,
- le curseur délimite une extrémité du chemin,
- l'organe de mesure est configuré pour mesurer la tension ou le courant et/ou la résistance et possède une borne de mesure reliée à une extrémité du chemin et une autre borne de mesure reliée à une extrémité du chemin délimitée par le curseur,
- dans au moins une position de l'organe de commande, le curseur ne réalise pas de contact électrique avec le chemin du circuit conducteur de sorte qu'aucune mesure électrique n'est réalisée par l'organe de mesure,
- le capteur de position comprend trois bornes ou extrémités reliées à l'organe de mesure, deux bornes de mesure de l'organe de mesure étant reliées respectivement à deux extrémités du circuit conducteur, la troisième borne de mesure de l'organe de mesure étant reliée au point de contact du curseur avec le circuit conducteur,
- le circuit conducteur est situé en vis-à-vis d'un zone conductrice flexible disposée de façon espacée par rapport au circuit conducteur, dans une pluralité de positions actives de l'organe de commande, le curseur étant en appui sur la zone conductrice flexible et déforme élastiquement localement cette zone conductrice pour former un contact électrique localisé entre la zone conductrice et le circuit conducteur,
- le circuit conducteur et la zone conductrice ont des résistances électriques distinctes,
- la zone conductrice flexible est déposée ou intégrée à un premier support flexible, le circuit conducteur étant déposé ou intégré à un second support, le capteur comprenant en outre un ensemble d'entretoise(s) disposée(s) entre les deux supports et assurant l'espacement de la zone conductrice par rapport au circuit conducteur, les deux supports et l'ensemble d'entretoise(s) délimitant un boîtier,
- l'un parmi : la zone conductrice, le circuit conducteur est recouvert(e) ou enfermé(e) dans une membrane de protection,
- le boîtier est recouvert ou enfermé dans une membrane de protection souple,
- l'un au moins parmi : le circuit conducteur et la zone conductrice comprend une couche de matériau conducteur, déposée sur ou intégrée dans une surface d'un support isolant électriquement,
- le robinet comprend un organe d'acquisition de stockage et de traitement de données, le capteur de position étant relié à ce dernier pour transmettre un signal représentatif de la position l'organe de régulation et/ou du débit et/ou la pression de fluide imposé par l'organe de régulation,
- le robinet comprend au moins un afficheur de données et/ou un émetteur de données relié à l'organe d'acquisition de stockage et de traitement de données,
- le circuit conducteur a une largeur comprise entre 0,001mm et 50mm et de préférence entre 0,1mm et 15mm,
- le circuit conducteur a une épaisseur comprise entre un nanomètre et 10mm et de préférence entre 0,05mm et 2mm,
- le capteur de position génère un signal de valeur de tension et/ou de résistance déterminée en fonction de la position de l'organe de commande par rapport au corps du robinet
- le capteur de position forme un potentiomètre,
- l'organe de commande manuelle de l'organe de régulation est déplaçable dans une position dite « de fermeture » correspondant une fermeture du premier circuit de soutirage, c'est-à-dire que le débit de fluide admis à passer de l'extrémité amont vers l'extrémité aval est nul,
- les trois bornes du circuit conducteur forment un système à trois fils avec deux canaux de sortie résistifs et un canal de collecteur électrique formant un potentiomètre à membrane,
- l'organe d'acquisition de stockage et de traitement de données est configuré, en réponse à la réception du signal transmis par le capteur de position, pour commander l'affichage sur l'afficheur, respectivement l'envoi via l'émetteur de données, d'une information relative du débit et/ou la pression de fluide imposé par l'organe de régulation et/ou du mode d'utilisation du robinet,
- le contact électrique localisé entre la zone conductrice et le circuit conducteur réalisé par le curseur provoque une circulation de courant électrique entre une première extrémité du circuit conducteur (reliée à une borne de l'organe de mesure) jusqu'au point de contact entre le circuit conducteur et la zone conductrice, le courant transitant ensuite dans la zone conductrice jusqu'à une extrémité de cette zone conductrice reliée à une autre borne de l'organe de mesure.

L'invention concerne également une bouteille de fluide sous pression comprenant un robinet selon l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue de côté, schématique et partielle, illustrant un robinet monté sur une bouteille de gaz sous pression selon un exemple de possible de réalisation de l'invention,
- la figure 2 illustre de façon schématique et partielle, la structure et le fonctionnement d'une partie du robinet de la figure 1,
- la figure 3 représente une vue en perspective, schématique et partielle, illustrant un exemple possible de structure et le fonctionnement d'un capteur de position intégré à un organe de commande d'un robinet,
- la figure 4 représente une vue de face, schématique et partielle, illustrant un détail du capteur de position de la figure 3,
- la figure 5 représente une vue en coupe transversale, schématique et partielle, illustrant un détail du capteur de position selon un mode possible de réalisation,
- la figure 6 représente une vue en coupe transversale, schématique et partielle, illustrant un détail du capteur de position coopérant avec l'organe de commande selon un mode possible de réalisation,
- les figures 7 et 8 représentent des vues de face, schématiques et partielles, illustrant un détail du capteur de position selon deux configurations ou positions différentes,
- la figure 9 représente une vue en coupe transversale, schématique et partielle, illustrant un détail de la structure du capteur de position coopérant avec l'organe de commande selon un autre mode possible de réalisation,
- la figure 10 représente une vue de face, schématique et partielle, illustrant un détail du capteur de position selon une autre forme de réalisation possible.

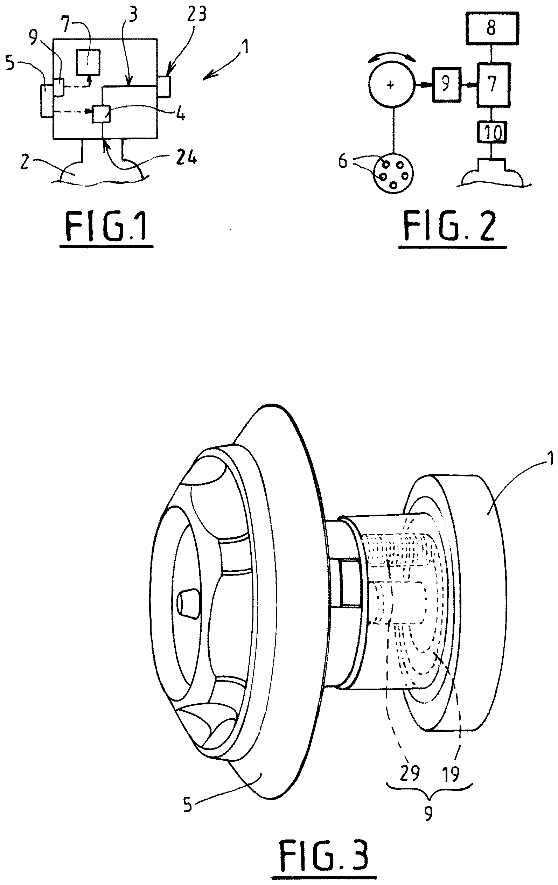

La figure 1 représente schématiquement une bouteille 2 de gaz sous pression munie d'un robinet 1 susceptible de mettre en œuvre l'invention.

Le robinet 1 comprend un corps muni d'une extrémité destinée à être montée dans l'orifice d'une bouteille 2 de fluide sous pression (par exemple par vissage). En variante le robinet 1 peut être raccordé, via un circuit, à un ensemble de bouteille(s).

Classiquement, le corps du robinet 1 abrite un circuit 3 de soutirage comprenant une première extrémité 24 amont communiquant avec le volume de stockage de la bouteille 2. Le circuit 3 de soutirage comprend une seconde extrémité 23 aval destinée à être raccordée à un organe utilisateur du gaz soutiré (par exemple un patient dans le cas d'oxygène ou d'un autre gaz médical).

Le circuit 3 de soutirage comprend un organe 4 de régulation du débit et/ou de la pression du fluide soutiré entre les extrémités amont 24 et aval 23. Cet organe 4 de régulation est par exemple un régulateur de débit à orifices calibrés 6 permettant de sélectionner un débit de gaz soutiré (cf. la représentation schématiquement de la figure 2). Bien entendu tout autre organe de régulation peut être envisagé, par exemple une vanne à ouverture proportionnelle.

Le robinet 1 comprend un organe 5 de commande manuelle de l'organe 4 de régulation. L'organe 5 de commande est monté mobile relativement au corps du robinet 1 et coopère avec l'organe 4 de régulation pour contrôler le débit et/ou la pression de fluide admis à circuler selon la position de l'organe 5 de commande par rapport au corps du robinet 1.

L'organe 5 de commande comprend par exemple un volant rotatif. Bien entendu, tout autre système approprié peut être envisagé (levier pivotant,...). Par exemple, l'organe 5 de commandes sélectionne un orifice calibré 6 et/ou commande une vanne de restriction de débit en fonction de sa position parmi une pluralité de positions discrètes (de préférence stables) ou une pluralité de positions d'un déplacement continu. En particulier, les positions stables peuvent être référencées mécaniquement par un point dur (par exemple via un système d'encliquetage notamment).

Le robinet 1 comprend un dispositif électronique d'indication de donnée(s) relative(s) au contenu de fluide dans une bouteille 2 raccordée au robinet 1. Le dispositif peut être du type comprenant un organe 7 d'acquisition de stockage et de traitement de données et au moins un afficheur 8 de données relié à l'organe 7 d'acquisition de stockage et de traitement de données (cf. figures 1 et 2).

L'organe 7 d'acquisition de stockage et de traitement de données comprend par exemple un calculateur et/ou ordinateur et/ou un microprocesseur ou tout autre système équivalent.

Bien entendu, ce dispositif peut comporter un ou plusieurs organes de réception de données (par connexion filaire et/ou sans fil : antenne(s), port(s)...) ainsi qu'un ou plusieurs organes d'émission de données (par connexion filaire et/ou sans fil : antenne(s), port(s)).

Le robinet 1 comporte un capteur 9 de position de l'organe 5 de commande manuelle de l'organe 4 de régulation. Le capteur 9 de position est relié à l'organe 7 d'acquisition de stockage et de traitement de données pour transmettre à ce dernier un signal représentatif de position de l'organe 5 de commande ou directement un signal correspondant au débit et/ou la pression de fluide imposé par l'organe 4 de régulation.

Le capteur 9 de position de l'organe 5 de commande comprend par exemple un convertisseur du déplacement mécanique de l'organe 5 de commande en un signal électrique exploitable par l'organe 7 d'acquisition de stockage et de traitement de données.

Le capteur 9 de position fournit par exemple un signal électrique ou numérique déterminé en fonction de la position de l'organe 5 de commande. Ce signal peut être fourni par voie filaire et/ou sans fil.

Le capteur 9 de position comprend un circuit 19 conducteur comportant au moins une piste conductrice ayant une résistance électrique déterminée. Ce circuit 19 conducteur est situé de préférence sur une partie fixe du robinet 1.

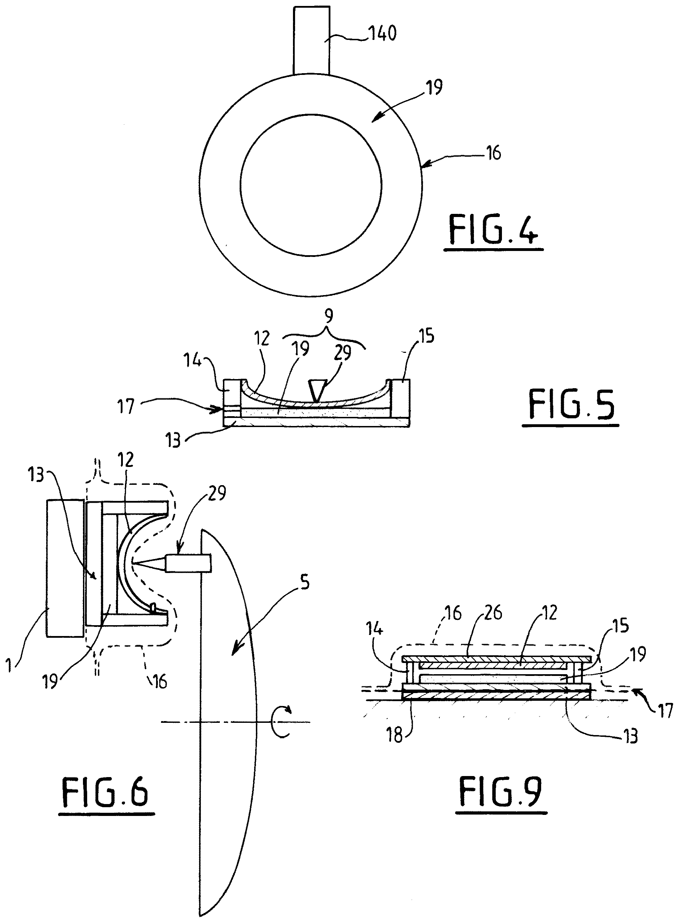

Par exemple, le circuit 19 conducteur est une bande de faible épaisseur disposée dans un plan perpendiculaire à l'axe de rotation de l'organe 5 de commande (molette rotative cf. figure 6 notamment).

Le capteur 9 comprend en outre un organe 11 de mesure d'une grandeur électrique du circuit 19 conducteur (tension et/ou résistance notamment) et un curseur 29. L'organe 11 de mesure est par exemple un voltmètre, un ohmmètre, un microprocesseur ou tout autre appareil approprié ou toute combinaison de ces exemples.

Le curseur 29 est monté sur l'organe de l'organe 5 de commande et est donc mobile relativement au circuit 19 conducteur lorsque l'organe 5 de commande est déplacé. Le curseur 29 comprend par exemple un bossage ou axe perpendiculaire au plan du circuit 19 conducteur.

Bien entendu, en variante, le circuit 19 conducteur pourrait être situé sur l'organe 5 de commande (mobile) et le curseur 29 sur la partie fixe du robinet.

Ainsi, le circuit 19 conducteur et le curseur 29 sont mobiles relativement l'un par rapport à l'autre lors du déplacement (rotation par exemple) de l'organe 5 de commande par rapport au corps du robinet 1 dans des configurations distinctes. Dans ces configurations distinctes, le curseur 29 modifie la forme et/ou la surface du circuit 19 conducteur mesuré par l'organe 11 de mesure. C'est-à-dire que le mouvement relatif du curseur 29 change la signature électrique (tension et/ou résistance mesurée par l'organe 11 de mesure).

Comme illustré aux figures 3, 4, 7, 8 et 10, le circuit 19 conducteur comprend de préférence un chemin continu. Ce chemin correspond à celui du déplacement du curseur 29 et est donc circulaire dans l'exemple d'un organe 5 de commande rotatif (un arc de cercle ou un cercle complet par exemple). En effet, le curseur 29 est mobile le long d'au moins une partie du chemin.

Le cercle ou arc de cercle peut être centré sur l'axe de rotation de l'organe 5 de commande rotatif.

Le circuit 19 conducteur comprend une couche de matériau conducteur, par exemple une encre métallisée, notamment argentée, déposée sur une surface d'un support 13. Bien entendu tout autre type de structure ou forme de piste conductrice est envisageable.

Par exemple, le circuit 19 conducteur a une épaisseur comprise entre un nanomètre et 10mm et de préférence entre 0,05mm et 2mm.La circuit 19 conducteur peut avoir une longueur (périmètre dans le cadre d'un cercle ou arc de cercle) qui peut être compris entre 0,1cm et 50cm, notamment entre 2cm et 30cm et plus particulièrement entre 5cm et 20cm.

De même, la largeur du circuit 19 conducteur (largeur du chemin) peut être comprise 0,001 cm et 10cm et de préférence entre 0,5cm et 3cm notamment entre 0,1 et 1,5cm.

Par exemple, le circuit 19 conducteur est déposé ou collé sur un support 13 (ou intégré dedans). Le support peut être une plaque 13 par exemple. Cette plaque 13 est de préférence un support non conducteur électrique, par exemple un plastique.

L'organe 11 de mesure peut être configuré pour mesurer la tension et/ou courant et/ou la résistance (notamment via la relation U=R.I) et peut posséder une première borne de mesure reliée à une première extrémité du chemin (par exemple au niveau d'une extrémité 140 de connexion). L'organe 11 de mesure peut posséder une seconde borne de mesure reliée à l'extrémité du chemin délimitée par le curseur 29.

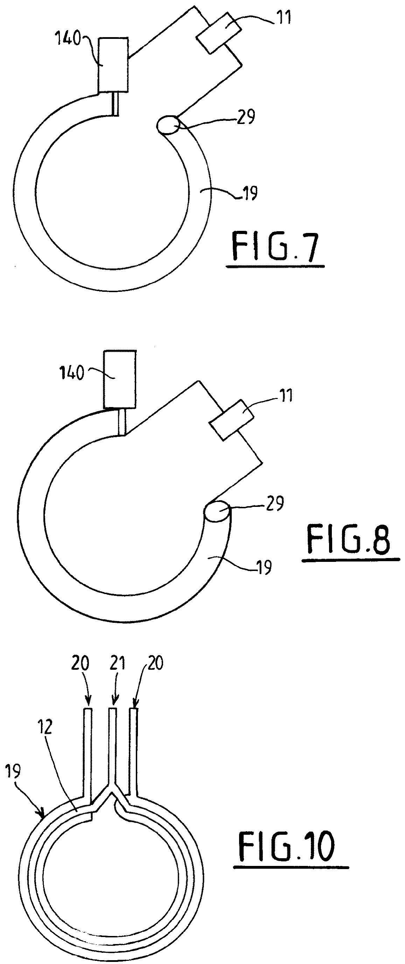

Comme illustré aux figures 7 et 8, le curseur 29 mobile délimite une extrémité du chemin mesuré par l'organe 11 de mesure. Ce chemin mesuré est plus ou moins long/grand (résistance plus ou moins grande) selon la position du curseur 29 relativement au circuit conducteur 19.

Dans les représentations des figures 5, 6, 9, 10, le capteur comprend une zone conductrice 12 située en vis-à-vis du circuit conducteur 19.

Cette zone 12 conductrice a de préférence la même forme générale (chemin/piste) que le circuit 19 conducteur.

Par exemple, deux extrémités 20 du circuit 19 conducteur sont reliées respectivement à deux bornes de l'organe 11 de mesure. Une extrémité 21 de la zone conductrice 12 peut être reliée à une troisième borne de l'organe 11 de mesure.

Ces trois bornes peuvent être assimilées à un système à trois fils avec deux canaux de sortie résistifs et un canal de collecteur électrique. Ceci peut être assimilé à un potentiomètre (notamment à membrane). Il peut fonctionner électroniquement de la même façon. Ainsi, suivant l'endroit où le curseur 29 appui, la valeur de résistance mesurée par l'organe 11 de mesure sera différente (par rapport à une résistance de référence, par exemple une résistance maximale déterminée).

Ainsi, c'est la valeur résistive correspondante à la position du curseur 29 qui informera de la position de l'organe 5 de commande.

Le capteur 9 de position permet ainsi d'obtenir des valeurs de résistance mesurées qui sont différentes selon qu'une pression (cureur 29) est appliquée à différents endroits d'un circuit 19 conducteur.

Bien entendu, en variante cela pourrait être l'inverse (une extrémité du circuit 19 conducteur reliée à une borne de l'organe 11 de mesure et deux extrémités de la zone conductrice 12 reliées respectivement à deux autres bornes de l'organe 11 de mesure).

De même, il est possible d'envisager des configurations à plus de trois extrémités/bornes de mesure.

De même, il est possible d'envisager des configurations à deux bornes de mesure uniquement (cf. ci-dessus selon la figure 7 ou 8 ou en prévoyant une seule borne de mesure pour une extrémité du circuit 19 conducteur et une seule extrémité de la zone conductrice 12 reliée à une autre borne de l'organe 11 de mesure).

Dans le cas d'une telle configuration à deux bornes de mesure, il peut ainsi être envisagé de mesurer uniquement une résistance variable (sans avoir une valeur de référence maximal comme dans le cas d'une configuration avec trois bornes ou plus tel décrit ci-dessus).

De préférence la zone 12 conductrice est espacée du circuit 19 de mesure (distance comprise par exemple entre 0,01mm et 10mm.

Le curseur 29 appuie sur la zone 12 conductrice et la déforme localement pour réaliser un contact électrique entre la zone 12 conductrice et le circuit 19 conducteur (cf. figures 5 ou 6).

C'est-à-dire que le curseur 29, en déformant la zone 12 conductrice (de préférence flexible), vient permettre le contact en un point déterminé entre la zone conductrice 12 et le circuit 19 conducteur.

De préférence, la zone conductrice 12 et le circuit 19 conducteur ont des résistances (résistances totales et/ou par unité de distance) qui sont différentes et déterminées. Par exemple les résistances peuvent être très faibles et notamment comprises entre zéro et 10 megohm.

La différence de résistance peut être obtenue via une épaisseur et/ou une pigmentation et/ou une composition et/ou un nombre de couche et/ou une matière différente(s).

Lorsqu'un tel contact est établi, le capteur 9 génère un courant électrique qui circule dans le circuit 19 électrique entre une première extrémité 20 de ce circuit 19 électrique jusqu'au point de contact avec la zone 12 conductrice. Le courant poursuit sa circulation ensuite dans la zone 12 conductrice du point de contact jusqu'à l'extrémité reliée à l'organe 11 de mesure. Ainsi, suivant la position de contact, le chemin parcouru par le courant dans une portion de résistance donnée respective va engendrer une mesure différente pour le capteur 11 (tension/résistance...).

La position est déterminée précisément via un simple circuit conducteur 19, 12 peu encombrant.

Comme illustré aux figures 5 et 6, le circuit 19 conducteur peut être situé en vis-à-vis de la zone 12 conductrice qui est flexible ou montée sur un support flexible.

La zone 12 conductrice est disposée de façon espacée par rapport au circuit 19 conducteur.

Le curseur 29 peut être en appui sur la zone 12 conductrice et peut déformer élastiquement localement cette première pour former un contact électrique localisé avec le circuit 19. Ce contact électrique peut être le point de contact relié à une borne de l'organe 11 de mesure.

Ainsi quand le curseur 29 (bossage) fait le contact avec le circuit 19 conducteur, les deux pistes conductrices 12, 19 entrent en contact et délimitent le chemin dont la résistance est mesurée. La valeur maximale de résistance offre une étendue de mesure permettant de distinguer une pluralité de positions de l'organe 5 de commande.

Les deux éléments (mobile 29 et fixe 19) du capteur 9 sont donc de préférence séparés ce qui leur permet au repos de ne pas se toucher et donc de ne pas conduire un courant (circuit ouvert). Ceci peut être mis à profit dans au moins une position de l'organe 5 de commande (cf. ci-après notamment lorsque l'organe 5 de commande est dans une position de fermeture du circuit 3 du robinet).

Les deux éléments 12, 19 peuvent être espacées l'une de l'autre via un ensemble d'entretoise(s) 15 isolantes.

Par exemple le circuit 19 conducteur est solidaire d'un support 13 isolant et fixé sur le corps du robinet 1 ou un élément du robinet.

L'ensemble comprenant le circuit 19 conducteur et la zone conductrice 12 peut être logé dans une membrane 16 de protection (par exemple étanche et/ou souple), cf. figure 6.

Dans le mode de réalisation de la figure 9 le dispositif comprend (de haut en bas sur la figure) :
- un support 26 (plaque par exemple) non conducteur,
- la zone 12 conductrice solidaire d'une face dudit support 26,
- un espacement isolant (par exemple de l'air via un système d'entretoises 14, 15),
- le circuit 19 conducteur,
- un support 13 isolant tel qu'une plaque par exemple (le circuit conducteur 19 étant rapporté et ou intégré à ce support),
- et une couche 18 adhésive pour maintenir ce capteur sur une partie du robinet ou un organe du robinet.

Comme illustré, cet ensemble peut être logé dans une membrane 16 de protection. De préférence la membrane 16 est souple et peut être étanche.

Par exemple, cette membrane 16 peut être constituée d'au moins un matériau parmi : du plastique souple ou rigide, notamment du polyester.

Les supports 26, 13 et entretoises 14, 15 peuvent délimiter un boîtier.

Ce boîtier (et/ou la membrane 16) peut comprendre au moins un orifice 17. Cet orifice 17 permet d'éviter un mouvement parasite des plaques 12, 13 (écartement ou rapprochement en cas de changement de pression et/ou de température de l'air contenu dans ce boîtier ou dans la membrane 16).

A noter que l'un au moins des supports 26, 13 peut être solidaire de la membrane 16 (par exemple collé et/ou intégré dans ou sur la membrane 16).

Comme illustré schématiquement à la figure 2, le robinet 1 peut comporter en plus un capteur 10 de pression destiné à mesurer la pression au sein du volume de stockage de la bouteille 2. Le capteur 10 de pression peut être relié à l'organe 7 d'acquisition de stockage et de traitement de données pour transmettre à ce dernier un signal représentatif de la pression de fluide mesurée. L'organe 7 d'acquisition de stockage et de traitement de données peut être configuré, en réponse à la réception de ce signal de pression, pour calculer et afficher sur l'afficheur 8 une information d'autonomie ou de contenu de fluide restant dans la bouteille 2 (à partir également de préférence de l'information donnée par le capteur de position 9 de l'organe 5 de commande qui détermine le débit soutiré de la bouteille 2).

Par exemple l'information d'autonomie ou de contenu de fluide restant dans la bouteille 2 peut être exprimée en temps restant (respectivement en quantité restante) en divisant la pression initiale mesurée par le capteur 10 de pression (ou respectivement, une quantité du gaz courante), par la variation de pression théorique imposée par l'organe 4 de régulation (respectivement la variation de quantité imposée par l'organe (4) de régulation), selon une formule par exemple du type: Temps restant= Pression initiale/variation de pression imposée (ou respectivement: Temps restant= Contenu de fluide restant/variation de quantité imposée).

Les variations de quantité ou de pression théoriques peuvent être calculées par exemple via l'équation des gaz parfait PV=nRT ou réels PV= ZnRT (unités S.I.).

Le volume V de la bouteille 2 peut être connu et renseigné dans le l'organe 7 d'acquisition de stockage et de traitement de données et la température peut être mesurée par un capteur extérieur ambiant ou calculée ou renseignée ou approximée.

Le système de capteur 9 de position présente l'avantage d'une détection fiable sans être encombrante. Le circuit conducteur 29 plat est en particulier facile à intégrer dans un volume exigu. En outre, cette solution de capteur de position ne nécessite pas de prévoir de fils électriques associés à une partie mobile du mécanisme. Le nombre de pièce est également réduit (notamment par rapport à un système utilisant plusieurs capteurs et/ou plusieurs éléments à détecter par les capteurs).

Le capteur de position peut être facilement calibré afin d'assurer une bonne reproductibilité dans une production à grande série.

Au moins l'un parmi le capteur 9 de position et le capteur 10 de pression, l'afficheur 8, l'organe 7 d'acquisition de stockage et de traitement de données peut être alimenté électriquement par une pile et/ou un système inductif.

De préférence l'organe 5 de commande manuelle de l'organe 4 de régulation peut être déplacé dans une position dite « de fermeture » correspondant une fermeture du circuit 3 de soutirage. C'est-à-dire que le débit de fluide admis à passer de l'extrémité 13 amont vers l'extrémité aval 23 est nul.

De préférence, dans la position de fermeture de l'organe 5 de commande, le capteur 9 de position ne consomme pas d'énergie. Par exemple, le curseur 29 ne réalise pas de contact avec le chemin du circuit 19 conducteur (circuit de mesure de l'organe 11 est ouvert).

C'est-à-dire que dans cette position de l'organe 5 de commande (ou une ou autre position), le curseur 29 ne provoque pas de contact électrique avec le circuit 19 conducteur. Il n'y a alors dans cette position pas de consommation d'énergie.

Bien que non représenté par soucis de simplification, le robinet 1 peut comprendre un autre circuit remplissage et/ou de soutirage, par exemple distinct du circuit 3 de soutirage. Ce second circuit de remplissage peut le cas échéant posséder une portion commune avec le circuit 3 de soutirage.

L'invention s'applique avantageusement aux bouteilles de gaz sous pression, notamment aux bouteilles contenant de l'oxygène sous pression.

La solution peut concerner en particulier des sélecteurs de débit rotatifs pouvant se trouver sur le robinet (par exemple avec détendeur) d'une bouteille sous pression. Plus particulièrement, la solution propose un système de détection permettant de connaître le débit sélectionné par l'utilisateur grâce à la position détectée de l'élément rotatif.

## Revendications

1. Robinet pour bouteille de fluide sous pression comprenant un corps muni d'une extrémité destinée à être reliée à l'orifice d'une bouteille de fluide sous pression, le corps du robinet (1) abritant un circuit (3) de soutirage comprenant une première extrémité (24) amont destinée à communiquer le volume de stockage d'une bouteille de fluide sous pression et une seconde extrémité (23) aval destinée à être raccordée à un organe utilisateur du gaz soutiré, le circuit (3) de soutirage comprenant un organe (4) de régulation du débit et/ou de la pression du fluide soutiré entre les extrémités amont (24) et aval (23), le robinet (1) comprenant un organe (5) de commande manuelle de l'organe (4) de régulation, l'organe (5) de commande étant monté mobile relativement au corps du robinet (1) et coopérant avec l'organe (4) de régulation pour contrôler le débit et/ou la pression de fluide admis à circuler de l'extrémité (24) amont vers l'extrémité aval (23) selon la position de l'organe (5) de commande par rapport au corps du robinet (1), le robinet (1) comportant un capteur (9) de position de l'organe (5) de commande configuré pour générer un signal électrique représentatif de la position de ce dernier ou du débit et/ou la pression de fluide imposé par l'organe (4) de régulation, le capteur (9) de position de l'organe (5) de commande comprenant un circuit (19) conducteur ayant une résistance électrique déterminée, un organe (11) de mesure d'une grandeur électrique du circuit (19) conducteur et un curseur (29), **caractérisé en ce que** le circuit (19) conducteur et le curseur (29) sont mobiles relativement l'un par rapport à l'autre lors du déplacement de l'organe (5) de commande par rapport au corps du robinet (1) dans des configurations distinctes dans lesquelles le curseur (29) modifie la forme et/ou la surface du circuit (19) conducteur mesuré par l'organe (11) de mesure.

2. Robinet selon la revendication 1, **caractérisé en ce que** le circuit (19) conducteur est monté fixe relativement au corps du robinet et le curseur (29) est monté sur l'organe (5) de commande, c'est-à-dire mobile relativement au corps du robinet (1).

3. Robinet selon la revendication 1 ou 2, **caractérisé en ce que** le circuit (19) conducteur comprend un chemin continu et **en ce que** le curseur (29) est mobile le long d'au moins une partie du chemin.

4. Robinet selon la revendication 3, **caractérisé en ce que** le curseur (29) délimite une extrémité du chemin.

5. Robinet selon la revendication 4, **caractérisé en ce que** l'organe (11) de mesure est configuré pour mesurer la tension ou le courant et/ou la résistance et possède une borne de mesure reliée à une extrémité du chemin et une autre borne de mesure reliée à une extrémité du chemin délimitée par le curseur (29).

6. Robinet selon la revendication 5, **caractérisé en ce que**, dans au moins une position de l'organe (5) de commande, le curseur (29) ne réalise pas de contact électrique avec le chemin du circuit (19) conducteur de sorte qu'aucune mesure électrique n'est réalisée par l'organe (11) de mesure.

7. Robinet selon l'une quelconque des revendications 5 ou 6, **caractérisé en ce que** le capteur (9) de position comprend trois bornes ou extrémités reliées à l'organe (11) de mesure, deux bornes de mesure de l'organe (11) de mesure étant reliées respectivement à deux extrémités (20) du circuit (19) conducteur, la troisième borne de mesure de l'organe (11) de mesure étant reliée au point de contact du curseur (29) avec le circuit (19) conducteur.

8. Robinet selon l'une quelconque des revendications 1 à 7, **caractérisé en ce que** le circuit (19) conducteur est situé en vis-à-vis d'un zone (12) conductrice flexible disposée de façon espacée par rapport au circuit (19) conducteur et **en ce que**, dans une pluralité de positions actives de l'organe (5) de commande, le curseur (29) est en appui sur la zone (12) conductrice flexible et déforme élastiquement localement cette zone (12) conductrice pour former un contact électrique localisé entre la zone (12) conductrice et le circuit (19) conducteur.

9. Robinet la revendication 8, **caractérisé en ce que** le circuit (19) conducteur et la zone (12) conductrice ont des résistances électriques distinctes.

10. Robinet selon la revendication 8 ou 9, **caractérisé en ce que** la zone (12) conductrice flexible est déposée ou intégrée à un premier support (26) flexible, le circuit (19) conducteur étant déposé ou intégré à un second support (13), le capteur comprenant en outre un ensemble d'entretoise(s) (15) disposée(s) entre les deux supports (26, 13) et assurant l'espacement de la zone (12) conductrice par rapport au circuit (19) conducteur, les deux supports (26, 13) et l'ensemble d'entretoise(s) (15) délimitant un boîtier.

11. Robinet selon l'une quelconque des revendications 8 à 10, **caractérisé en ce que** au moins l'un parmi : la zone (12) conductrice, le circuit (19) conducteur est recouvert(e) ou enfermé(e) dans une membrane (16) de protection.

12. Robinet selon la revendication 10, **caractérisé en ce que** le boîtier est recouvert ou enfermé dans une membrane (16) de protection souple.

13. Robinet selon l'une quelconque des revendications 10 à 12, **caractérisé en ce que** l'un au moins parmi : le circuit (19) conducteur et la zone (12) conductrice comprend une couche de matériau conducteur, déposée sur ou intégrée dans une surface d'un support isolant électriquement.

14. Robinet selon l'une quelconque des revendications 1 à 13, **caractérisé en ce qu'**il comprend un organe (7) d'acquisition de stockage et de traitement de données et **en ce que** le capteur (9) de position est relié à ce dernier pour transmettre un signal représentatif de la position l'organe (5) de commande et/ou du débit et/ou la pression de fluide imposé par l'organe (5) de commande.

15. Robinet selon la revendication 14, **caractérisé en ce qu'**il comprend au moins un afficheur (8) de données et/ou un émetteur de données relié à l'organe (7) d'acquisition de stockage et de traitement de données.

16. Bouteille de fluide sous pression **caractérisée en ce qu'**elle comprend un robinet selon l'une quelconque des revendications 1 à 15.

## Patentansprüche

1. Schließhahn für Druckfluidflasche, umfassend einen Körper, der mit einem Ende versehen ist, das dazu bestimmt ist, mit der Öffnung einer Druckfluidflasche verbunden zu werden, wobei der Körper des Schließhahns (1) einen Entnahmekreis (3) aufnimmt, der ein erstes stromaufwärtiges Ende (24), das dazu bestimmt ist, das Speichervolumen einer Druckfluidflasche zu kommunizieren, und ein zweites stromabwärtiges Ende (23) umfasst, das dazu bestimmt ist, an ein Benutzerorgan des entnommenen Gases angeschlossen zu werden, wobei der Entnahmekreis (3) ein Organ (4) zur Regulierung des Durchsatzes und/oder des Drucks des zwischen dem stromaufwärtigen Ende (24) und dem stromabwärtigen (23) Ende entnommenen Fluids umfasst, wobei der Schließhahn (1) ein Organ (5) zur manuellen Steuerung des Regulierungsorgans (4) umfasst, wobei das Steuerorgan (5) so in Bezug auf den Körper des Schließhahns (1) beweglich angebracht ist und mit dem Regulierungsorgan (4) zusammenwirkt, um den Durchsatz und/oder den Druck von Fluid, das zum Zirkulieren von dem stromaufwärtigen Ende (24) zu dem stromabwärtigen Ende (23) eingelassen wird, gemäß der Position des Steuerorgans (5) in Bezug auf den Körper des Schließhahns (1) zu steuern, wobei der Schließhahn (1) einen Positionssensor (9) des Steuerorgans (5) umfasst, der konfiguriert ist, um ein elektrisches Signal zu erzeugen, das für die Position dieses letzteren oder für den Durchsatz und/oder den vom Regulierungsorgan (4) auferlegten Fluiddruck repräsentativ ist, wobei der Positionssensor (9) des Steuerorgans (5) einen Leiterkreis (19) umfasst, der einen bestimmten elektrischen Widerstand, ein Organ (11) zum Messen einer elektrischen Größe des Leiterkreises (19) und einen Schieber (29) aufweist, **dadurch gekennzeichnet, dass** der Leiterkreises (19) und der Schieber (29) relativ zueinander beweglich sind, wenn das Steuerorgan (5) in Bezug auf den Körper des Schließhahns (1) in getrennten Konfigurationen bewegt wird, in denen der Schieber (29) die Form und/oder die Oberfläche des Leiterkreises (19), gemessen durch das Messorgan (11), verändert.

2. Schließhahn nach Anspruch 1, **dadurch gekennzeichnet, dass** der Leiterkreis (19) in Bezug auf den Körper des Schließhahns fest angebracht ist und der Schieber (29) auf dem Steuerorgan (5) angebracht ist, d.h. in Bezug auf den Körper des Schließhahn (1) beweglich ist.

3. Schließhahn nach Anspruch 1 oder 2, **dadurch gekennzeichnet, dass** der Leiterkreis (19) einen kontinuierlichen Weg umfasst und dass der Schieber (29) entlang mindestens eines Teils des Weges beweglich ist.

4. Schließhahn nach Anspruch 3, **dadurch gekennzeichnet, dass** der Schieber (29) ein Ende des Weges begrenzt.

5. Schließhahn nach Anspruch 4, **dadurch gekennzeichnet, dass** das Messorgan (11) konfiguriert ist, um Spannung oder Strom und/oder Widerstand zu messen, und einen Messanschluss besitzt, der mit einem Ende des Weges verbunden ist, und einen weiteren Messanschluss, der mit einem Ende des Weges verbunden ist, der durch den Schieber (29) begrenzt wird.

6. Schließhahn nach Anspruch 5, **dadurch gekennzeichnet, dass** in mindestens einer Position des Steuerorgans (5) der Schieber (29) keinen elektrischen Kontakt mit dem Weg des Leiterkreises (19) herstellt, so dass durch das Messorgan (11) keine elektrische Messung vorgenommen wird.

7. Schließhahn nach einem der Ansprüche 5 oder 6, **dadurch gekennzeichnet, dass** der Positionssensor (9) drei Anschlüsse oder Enden umfasst, die mit dem Messorgan (11) verbunden sind, wobei zwei Messanschlüsse des Messorgans (11) jeweils mit zwei Enden (20) des Leiterkreises (19) verbunden sind, wobei der dritte Messanschluss des Messorgans (11) mit dem Kontaktpunkt des Schiebers (29) mit dem Leiterkreis (19) verbunden ist.

8. Schließhahn nach einem der Ansprüche 1 bis 7, **dadurch gekennzeichnet, dass** sich der Leiterkreis (19) gegenüber einer flexiblen Leiterzone (12) befindet, die in einem Abstand in Bezug auf den Leiterkreis (19) angeordnet ist, und dadurch, dass in einer Vielzahl von aktiven Positionen des Steuerorgans (5) der Schieber (29) auf der flexiblen Leiterzone (12) aufliegt und diese Leiterzone (12) lokal elastisch verformt, um einen lokalisierten elektrischen Kontakt zwischen der Leiterzone (12) und dem Leiterkreis (19) zu bilden.

9. Schließhahn nach Anspruch 8, **dadurch gekennzeichnet, dass** der Leiterkreis (19) und die Leiterzone (12) getrennte elektrische Widerstände aufweisen.

10. Schließhahn nach Anspruch 8 oder 9, **dadurch gekennzeichnet, dass** die flexible Leiterzone (12) auf einer ersten flexiblen Halterung (26) aufgebracht oder integriert ist, wobei der Leiterkreis (19) auf einer zweiten Halterung (13) aufgebracht oder integriert ist, wobei der Sensor weiter eine Anordnung von Abstandshalter(n) (15) umfasst, die zwischen den beiden Halterungen (26, 13) angeordnet ist und den Abstand der Leiterzone (12) in Bezug auf den Leiterkreis (19) sicherstellt, wobei die beiden Halterungen (26, 13) und die Anordnung von Abstandshalter(n) (15) ein Gehäuse begrenzen.

11. Schließhahn nach einem der Ansprüche 8 bis 10, **dadurch gekennzeichnet, dass** mindestens eine/r von: der Leiterzone (12), dem Leiterkreis (19) von einer Schutzmembran (16) bedeckt oder umschlossen ist.

12. Schließhahn nach Anspruch 10, **dadurch gekennzeichnet, dass** das Gehäuse von einer flexiblen Schutzmembran (16) bedeckt oder umschlossen ist.

13. Schließhahn nach einem der Ansprüche 10 bis 12, **dadurch gekennzeichnet, dass** mindestens eine/r von: dem Leiterkreis (19) und der Leiterzone (12) eine Schicht aus leitendem Material umfasst, die auf eine Oberfläche einer elektrisch isolierenden Halterung aufgebracht oder in diese eingebettet ist.

14. Schließhahn nach einem der Ansprüche 1 bis 13, **dadurch gekennzeichnet, dass** er ein Organ (7) zur Speichererfassung und Datenverarbeitung umfasst und dadurch, dass der Positionssensor (9) mit diesem letzteren verbunden ist, um ein Signal zu übertragen, das für die Position des Steuerorgans (5) und/oder den Durchsatz und/oder den durch das Steuerorgan (5) auferlegten Fluiddruck repräsentativ ist.

15. Schließhahn nach Anspruch 14, **dadurch gekennzeichnet, dass** er mindestens eine Datenanzeige (8) und/oder einen Datenübermittler umfasst, die bzw. der mit dem Organ (7) zur Speichererfassung und Datenverarbeitung verbunden ist.

16. Druckfluidflasche, **dadurch gekennzeichnet, dass** sie einen Schließhahn nach einem der Ansprüche 1 bis 15 umfasst.

## Claims

1. Tap for pressurised fluid cylinder comprising a body provided with an end intended to be connected to the orifice of a pressurised fluid cylinder, the body of the tap (1) housing a bleed-off circuit (3) comprising a first upstream end (24) intended to connect the storage volume of a pressurised fluid cylinder and a second downstream end (23) intended to be connected to a user member of the drawn-off gas, the bleed-off circuit (3) comprising a member (4) for regulating the flow and/or the pressure of the drawn-off fluid between the upstream (24) and downstream (23) ends, the tap (1) comprising a member (5) for manually controlling the regulation member (4), the control member (5) being mounted mobile relative to the body of the tap (1) and engaging with the regulation member (4) in order to control the flow and/or the pressure of fluid taken in to be circulated from the upstream end (24) to the downstream end (23) according to the position of the control member (5) with respect to the body of the tap (1), the tap (1) comprising a position sensor (9) of the control member (5) configured to generate an electric signal representative of the position of the latter or of the flow and/or the pressure of fluid imposed by the regulation member (4), the position sensor (9) of the control member (5) comprising a conductive circuit (19) having a determined electrical resistance, a member (11) for measuring an electrical magnitude of the conductive circuit (19) and a cursor (29), **characterised in that** the conductive circuit (19) and the cursor (29) are mobile relative to one another during the movement of the control member (5) with respect to the body of the tap (1) in separate configurations wherein the cursor (29) modifies the shape and/or the surface of the conductive circuit (19) measured by the measuring member (11).

2. Tap according to claim 1, **characterised in that** the conductive circuit (19) is mounted fixed relative to the body of the tap, and the cursor (29) is mounted on the control member (5), i.e. mobile relative to the body of the tap (1).

3. Tap according to claim 1 or 2, **characterised in that** the conductive circuit (19) comprises a continuous path and **in that** the cursor (29) is mobile along at least one portion of the path.

4. Tap according to claim 3, **characterised in that** the cursor (29) delimits an end of the path.

5. Tap according to claim 4, **characterised in that** the measuring member (11) is configured to measure the voltage or the current and/or the resistance and has a measuring terminal connected to an end of the path and another measuring terminal connected to an end of the path delimited by the cursor (29).

6. Tap according to claim 5, **characterised in that**, in at least one position of the control member (5), the cursor (29) does not produce any electrical contact with the path of the conductive circuit (19) such that no electrical measurement is taken by the measuring member (11).

7. Tap according to any one of claims 5 or 6, **characterised in that** the position sensor (9) comprises three terminals or ends connected to the measuring member (11), two measuring terminals of the measuring member (11) being connected respectively to two ends (20) of the conductive circuit (19), the third measuring terminal of the measuring member (11) being connected to the contact point of the cursor (29) with the conductive circuit (19).

8. Tap according to any one of claims 1 to 7, **characterised in that** the conductive circuit (19) is situated opposite a flexible conductive zone (12) arranged spaced with respect to the conductive circuit (19) and **in that**, in a plurality of active positions of the control member (5), the cursor (29) is born on the flexible conductive zone (12) and elastically deforms locally this conductive zone (12) to form a localised electrical contact between the conductive zone (12) and the conductive circuit (19).

9. Tap according to claim 8, **characterised in that** the conductive circuit (19) and the conductive zone (12) have separate electrical resistances.

10. Tap according to claim 8 or 9, **characterised in that** the flexible conductive zone (12) is arranged or integrated with a first flexible support (26), the conductive circuit (19) being arranged or integrated with a second support (13), the sensor further comprising a set of one or more spacers (15) arranged between the two supports (26, 13) and ensuring the spacing of the conductive zone (12) with respect to the conductive circuit (19), the two supports (26, 13) and the set of one or more spacers (15) delimiting a casing.

11. Tap according to any one of claims 8 to 10, **characterised in that** at least one from among: the conductive zone (12) and the conductive circuit (19) is covered or confined in a protective membrane (16).

12. Tap according to claim 10, **characterised in that** the casing is covered or confined in a flexible protective membrane (16).

13. Tap according to any one of claims 10 to 12, **characterised in that** at least one from among: the conductive circuit (19) and the conductive zone (12) comprises a layer of conductive material, arranged on or integrated with a surface of an electrically insulating support.

14. Tap according to any one of claims 1 to 13, **characterised in that** it comprises an acquisition member (7) for storing and processing data and **in that** the position sensor (9) is connected to the latter in order to transmit a signal representative of the position, the control member (5) and/or the flow and/or the pressure of fluid imposed by the control member (5).

15. Tap according to claim 14, **characterised in that** it comprises at least one data display unit (8) and/or a data transmitter connected to the acquisition member (7) for storing and/or processing data.

16. Pressurised fluid cylinder **characterised in that** it comprises a tap according to any one of claims 1 to 15.
